# EUROPEAN PATENT APPLICATION

(11) **EP 4 600 535 A1**
(43) Date of publication of application: **13.08.2025**
(21) Application number: 23848254.1
(22) Date of filing: 20.12.2023
(51) Int. Cl.: F16L 37/088, F16L 17/03

(54) **QUICK CONNECT FITTING ASSEMBLY**

(71) Applicant: Langfang Shuchang Auto Parts Co., Ltd, Langfang, Hebei 065000 (CN)
(72) Inventor: LU, Xingyu, Langfang, Hebei 065000 (CN); LIU, Jiaqi, Langfang, Hebei 065000 (CN); WEI, Renjie, Langfang, Hebei 065000 (CN); XU, Xiaolong, Langfang, Hebei 065000 (CN); SHENG, Tianfang, Langfang, Hebei 065000 (CN)
(74) Representative: Gill Jennings & Every LLP
(86) International application number: PCT/CN2023/140125
(87) International publication number: WO 2025/129481

(57) **Abstract**

The present disclosure relates to the technology of equipment parts, and in particular to a quick plug connector assembly. The quick plug connector assembly includes a first connector, a second connector, and a clamp spring, where the second connector has a plug-in part plugged into the first connector; the clamp spring is disposed on the first connector; the clamp spring includes a limiting section and a connecting section located at an end of the limiting section; a side wall of the first connector is provided with a gap; an outer peripheral surface of the plug-in part is provided with a first annular groove facing the gap; the limiting section passes through the gap and is stuck into the first annular groove; the connecting section is provided with a stressed portion, and the cross-sectional size of the stressed portion is smaller than that of the rest of the clamp spring. In the process of plugging the plug-in part, the plug-in part is easy to push against the limiting section of the clamp spring to make stressed portion of the clamp spring elastically deformed, and the resistance of the clamp spring to the plug-in part is reduced, thereby reducing the insertion force required for plugging the second connector in the plugging process, and facilitating the operator to plug the plug-in part of the second connector into the first connector.

## Description

### TECHNICAL FIELD

The present disclosure relates to the technology of equipment parts, and in particular to a quick plug connector assembly.

### BACKGROUND

In the pipeline system of equipment, quick plug connector assembly is often used to connect pipelines of two different devices. Using quick plug connector assembly to connect two pipelines can not only ensure the reliability of the connection between the two pipelines, but also improve the assembling efficiency.

At present, a quick plug connector assembly includes a first connector, a second connector, and a clamp spring. The second connector is plugged into the first connector, and the first connector is provided with a gap, and the second connector is provided with an annular groove facing the gap. The clamp spring is assembled on the first connector, and the clamp spring is provided with a limiting section, the limiting section passes through the gap and is stuck in the annular groove, so that the second connector can be prevented from coming out of the first connector by means of the cooperation of the clamp spring and the annular groove.

However, an operator needs to use a large insertion force to plug the second connector into the first connector, which is inconvenient to operate.

### SUMMARY

In order to overcome the above defects in the prior art, a purpose of the present invention is to provide a quick plug connector assembly. With the quick plug connector assembly of the present invention, an operator can plug the second connector into the first connector with less insertion force, which is convenient for assembling.

The present invention provides a quick plug connector assembly, including a first connector, a second connector, and a clamp spring, where the second connector has a plug-in part plugged into the first connector; the clamp spring is disposed on the first connector, and the clamp spring includes a limiting section and a connecting section located at an end of the limiting section; a side wall of the first connector is provided with a gap, and an outer peripheral surface of the plug-in part is provided with a first annular groove facing the gap, and the limiting section passes through the gap and is stuck in the first annular groove.

The connecting section is provided with a stressed portion, and the stressed portion has a cross-sectional size smaller than that of a rest portion of the clamp spring.

For the quick plug connector assembly as described above, Optionally, two limiting sections are provided, the connecting section is arranged between the two limiting sections, each of opposite sides of the first connector is provided with one gap, each of the two limiting sections is configured to pass through one gap, and two stressed portion are provided, and the two stressed portions are located at two ends of the connecting section respectively.

For the quick plug connector assembly as described above, optionally, the stressed portion has a cross-sectional shape of elliptical, the rest portion of the clamp spring has a cross-sectional shape of circle, a long axis of the ellipse is parallel to an axial direction of the first connector, and a length of a short axis of the ellipse is smaller than a diameter of the circle.

For the quick plug connector assembly as described above, optionally, an outer peripheral surface of the first connector is provided with a protecting lug, and the protecting lug is provided with an accommodating cavity, and an end, which is far away from the connecting section, of the limiting section extends into the accommodating cavity.

For the quick plug connector assembly as described above, optionally, the clamp spring further includes a bending section, , and the bending section is located at the end of the limiting section far away from the connecting section, and the bending section is located in the accommodating cavity, and the size of the bending section in the axial direction of the first connector is larger than that of the gap in the axial direction of the first connector.

For the quick plug connector assembly as described above, optionally, the quick plug connector assembly further includes a sealing ring disposed on an inner peripheral surface of the first connector, and the sealing ring is in interference fit with the inner peripheral surface of the first connector and an outer peripheral surface of the second connector respectively.

For the quick plug connector assembly as described above, optionally, the first connector includes a first end into which the plug-in part is plugged, and an end, which is far away from the first end, of the sealing ring is provided with an outer annular lip and an inner annular lip, where the outer annular lip is configured to abut against the inner peripheral surface of the first connector and the inner annular lip is configured to abut against the outer peripheral surface of the second connector, and a second annular groove is formed between the outer annular lip and the inner annular lip.

For the quick plug connector assembly as described above, optionally, the quick plug connector assembly further includes a retaining ring, the inner peripheral surface of the first connector is provided with a limiting protrusion protruding inward, the first connector is provided with a step part, one end of the sealing ring abuts against the step part, the other end of the sealing ring abuts against the retaining ring, and an end, which is far away from the sealing ring, of the retaining ring abuts against the limiting protrusion.

For the quick plug connector assembly as described above, optionally, the end, which is far away from the sealing ring, of the retaining ring is provided with a plurality of fins arranged at intervals, and ends of the fins are configured to abut against the limiting protrusion.

For the quick plug connector assembly as described above, optionally, the plurality of fins are arranged on the retaining ring at equal intervals.

For the quick plug connector assembly as described above, optionally, a groove is formed between two adjacent fins, and the groove extends to an outside of the fins.

For the quick plug connector assembly as described above, optionally, the plug-in part is provided with a protruding part protruding outwards, and the first connector is provided with an accommodating part, and the protruding part extends into the accommodating part.

The invention has the technical effects that after the plug-in part of the second connector is plugged into the first connector, the limiting section of the clamp spring passes through the gap of the first connector and is stuck in the first annular groove on the plug-in part. The second connector is fixed to the first connector by the cooperation between the limiting section and the gap as well as the first annular groove respectively, so as to prevent the plug-in part of the second connector from being pulled out of the first connector. When the plug-in part is being plugged into the first connector, the end of the plug-in part pushes against the limiting section of the clamp spring to make the clamp spring elastically deformed, and then the limiting section of the clamp spring can be stuck in the first annular groove. The stressed portion is the main deformation portion of the clamp spring, and the cross-sectional size of the stress part is smaller than that of the rest portion of the clamp spring, therefore, the plug-in part easily push against the limiting section of the clamp spring to make the stressed portion of the clamp spring elastically deformed during the plugging process, thus reducing the resistance of the clamp spring to the plug-in part and further reducing the insertion force required for plugging the second connector during the plugging process, and thereby facilitating the operator to plug the plug-in part of the second connector into the interior of the first connector.

### BRIEF DESCRIPTION OF DRAWINGS

FIG. 1 is a schematic structural diagram of a quick plug connector assembly provided by an embodiment of the present application.
FIG. 2 is a schematic diagram in which a second connector, a clamp spring, a sealing ring and a retaining ring are respectively connected to a first connector provided by an embodiment of the application.
FIG. 3 is an exploded view of a quick plug connector assembly provided by an embodiment of the application.
FIG. 4 is a schematic structural diagram of a first connector provided by an embodiment of the present application.
FIG. 5 is a schematic structural diagram of a second connector provided by an embodiment of the present application.
FIG. 6 is a schematic structural diagram of a clamp spring provided by an embodiment of the present application.
FIG. 7 is a front view of the clamp spring provided by the embodiment of the application.
FIG. 8 is a sectional view taken along the line A-A of FIG. 7.
FIG. 9 is a sectional view taken along the line B-B of FIG. 7.
FIG. 10 is a sectional view of a quick plug connector assembly provided by an embodiment of the present application.
FIG. 11 is a cross-sectional view after a first connector, a clamp spring and a sealing ring are connected provided by an embodiment of the application.
FIG. 12 is a schematic structural diagram of a sealing ring provided by an embodiment of the application.
FIG. 13 is a structural schematic diagram of a retaining ring provided by an embodiment of the application.

Reference numbers: 100- first connector; 110- gap; 120- protecting lug; 121-accommodating cavity; 130- first end; 140- limiting protrusion; 150- step part; 160-accommodating part; 200- second connector; 210- plug-in part; 211- first annular groove; 212- protruding part; 300- clamp spring; 310- limiting section; 320- connecting section; 321-stressed portion; 330- bending section; 400- sealing ring; 410- outer annular lip; 420- inner annular lip; 430- second annular groove; 500- retaining ring; 510- fin; 520- groove.

### DESCRIPTION OF EMBODIMENTS

To make the objectives, technical solutions, and advantages of embodiments of the present invention clearer, the following clearly and comprehensively describes the technical solutions in embodiments of the present invention with reference to the accompanying drawings in embodiments of the present invention. Apparently, the described embodiments are merely a part rather than all embodiments of the present invention.

All other embodiments obtained by persons of ordinary skill in the art based on embodiments of the present invention without creative effort shall fall within the protection scope of the present invention. In the case of no conflict, the following embodiments and features in the embodiments can be combined with each other.

In the prior art, a quick plug connector assembly includes a first connector, a second connector, and a clamp spring. The second connector is plugged into the first connector, and the first connector is provided with a gap, and the second connector is provided with an annular groove facing the gap. The clamp spring is assembled on the first connector, and the clamp spring is provided with a limiting section, the limiting section passes through the gap and is stuck in the annular groove, so that the second connector can be prevented from coming out of the first connector by means of the cooperation of the clamp spring and the annular groove. However, in the process of plugging the second connector into the first connector, an end of the second connector needs to push against the clamp spring to make the clamp spring elastically deformed, and an operator needs to use a large insertion force to overcome the resistance provided by the clamp spring to plug the second connector into the first connector, which is inconvenient to operate.

After repeated thinking and verification, the inventor found that if the cross-sectional size of a portion, which is deformed, of the clamp spring is changed, the clamp spring will be easily deformed elastically when the second connector is being plugged into the first connector, thereby reducing the resistance provided by the clamp spring, and the operator can plug the second connector into the first connector with a small insertion force, which is convenient to operate. In addition, the cross-sectional shape of the rest portion of the clamp spring remains unchanged, so that after the operator plugs the second connector into the first connector easily, the second connector can be reliably fixed by the clamp spring and is prevented from coming out of the first connector.

In view of this, the inventor designed a quick plug connector assembly, in which a clamp spring is provided with a limiting section and a connecting section located at one end of the limiting section, and the connecting section is provided with a stressed portion, and the cross-sectional size of the stressed portion is smaller than that of the rest portion of the clamp spring. In the process of plugging a plug-in part of a second connector into a first connector, the stressed portion is prone to be elastically deformed, which reduces the resistance provided by the clamp spring, thereby reducing the insertion force required for plugging the second connector in the plugging process. After the plug-in part is plugged into the first connector, the limiting section of the clamp spring passes through a gap of the first connector and is stuck in a first annular groove on the plug-in part, and the cross-sectional shape of the limiting section is unchanged, and the pull-out resistance provided by the clamp spring will not change, so that the clamp spring can reliably fix the plug-in part in the first connector.

The technical solutions of a quick plug connector assembly provided by the embodiments of this application will be described in detail in combination with the accompanying drawings.

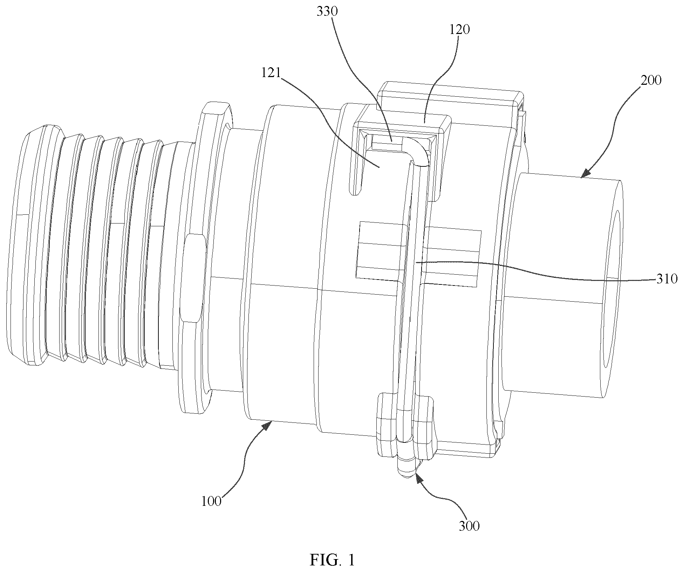

Referring to FIG. 1 to FIG. 9, a quick plug connector assembly provided by an embodiment of the application includes a first connector 100, a second connector 200, and a clamp spring 300, where the second connector 200 has a plug-in part 210 plugged into the first connector 100; the clamp spring 300 is disposed on the first connector 100; the clamp spring 300 includes a limiting section 310 and a connecting section 320 located at an end of the limiting section 310; a side wall of the first connector 100 is provided with a gap 110, an outer peripheral surface of the plug-in part 210 is provided with a first annular groove 211 facing the gap 110, and the limiting section 310 passes through the gap 110 and is stuck in the first annular groove 211.

The connecting section 320 is provided with a stressed portion 321, and the cross-sectional size of the stressed portion 321 is smaller than that of the rest portion of the clamp spring 300.

Where, the clamp spring 300 can be elastically deformed on the first connector 100 relative to the first connector 100. Exemplarily, the clamp spring 300 may be formed by bending a metal strip structure. Optionally, a coating can be provided on a surface of the clamp spring 300 to improve the corrosion resistance of the clamp spring 300. In one possible implementation, the gap 110 may be a waist-shaped hole in a side wall of the first connector 100. After the plug-in part 210 of the second connector 200 is plugged in place, a middle portion of the limiting section 310 passes through the gap 110 of the first connector 100 and extends into the first annular groove 211 of the plug-in part 210. Exemplarily, the size of the first annular groove 211 in an axial direction of the first connector 100 matches the size of the limiting section 310 in the axial direction of the first connector 100, so that after the limiting section 310 is stuck in the first annular groove 211, the second connector 200 will not move relative to the first connector 100.

It is worth mentioning that the stressed portion 321 is a deformed portion of the clamp spring 300 during the plugging process of the second connector 200. During the plugging process of the second connector 200, an end of the plug-in part 210 pushes against the limiting section 310, and the limiting section 310 causes the stressed portion 321 of the connecting section 320 to be elastically deformed. The length of the stressed portion 321 can be set as required, which is not uniquely defined here. Exemplarily, the cross-sectional shape of the rest portion of the clamp spring 300 may be circle, and the cross-sectional shape of the stressed portion 321 may be rectangle, ellipse or other suitable shapes. In one possible implementation, after the clamp spring 300 is formed by bending a metal strip, the stressed portion 321, which is used for deformation, of the clamp spring 300 can be polished to make the cross-sectional size of the stressed portion 321 smaller than that of the rest portion of the clamp spring 300.

In the quick plug connector assembly provided by this embodiment, after the plug-in part 210 of the second connector 200 is plugged into the first connector 100, the limiting section 310 of the clamp spring 300 passes through the gap 110 of the first connector 100 and is stuck in the first annular groove 211 on the plug-in part 210. The second connector 200 is fixed to the first connector 100 by the cooperation between the limiting section 310 and the gap 110 as well as the first annular groove 211 respectively, so as to prevent the plug-in part 210 of the second connector 200 from being pulled out of the first connector 100. When the plug-in part 210 is plugged into the first connector, the end of the plug-in part 210 pushes against the limiting section 310 of the clamp spring 300 to make the clamp spring 300 elastically deformed, and then the limiting section 310 of the clamp spring 300 can be stuck in the first annular groove 211. The stressed portion 321 is the main deformation portion of the clamp spring 300, and the cross-sectional size of the stressed portion 321 is smaller than that of the rest portion of the clamp spring 300. Therefore, the plug-in part 210 can easily push against the limiting section 310 of the clamp spring 300 during the plugging process, so that the stressed portion 321 of the clamp spring 300 is elastically deformed, and the resistance of the clamp spring 300 to the plug-in part 210 is reduced, thereby reducing the insertion force required for plugging the second connector 200 during the plugging process, and facilitating the operator to plug the plug-in part 210 of the second connector 200 into the first connector 100.

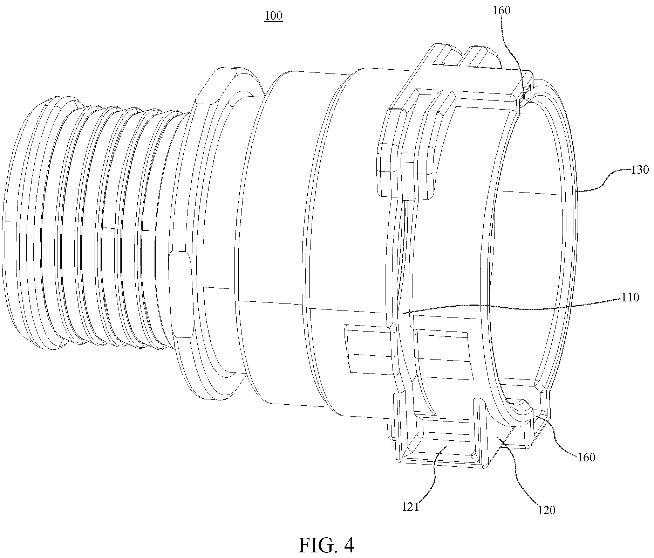

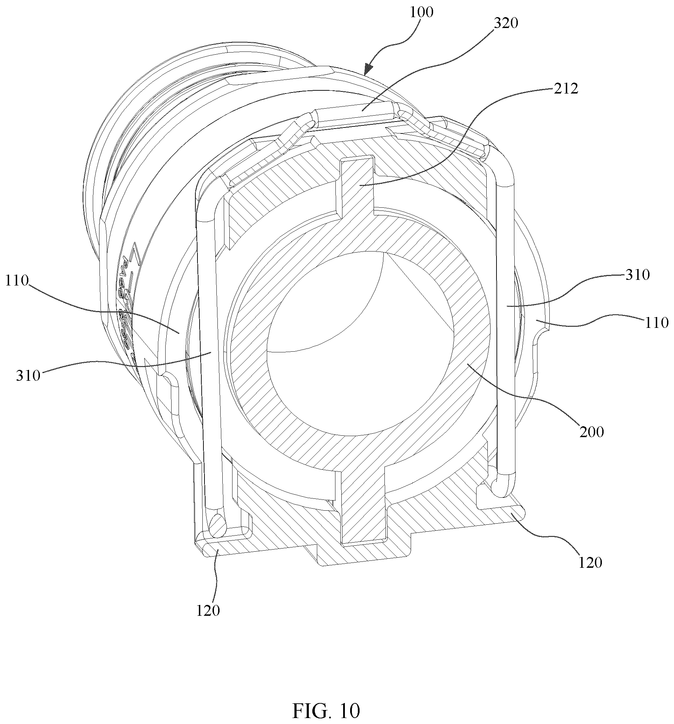

In one embodiment, as shown in FIGs. 4, 6, 7 and 10, the limiting section 310 is two in number, and the connecting section 320 is arranged between two limiting sections 310. Each of two opposite sides of the first connector 100 is provided with one gap 110, and two limiting sections 310 are configured to pass through two gaps 110, respectively. The stressed portion 321 is two in number, and the two stressed portions 321 are located at two ends of the connecting section 320 respectively.

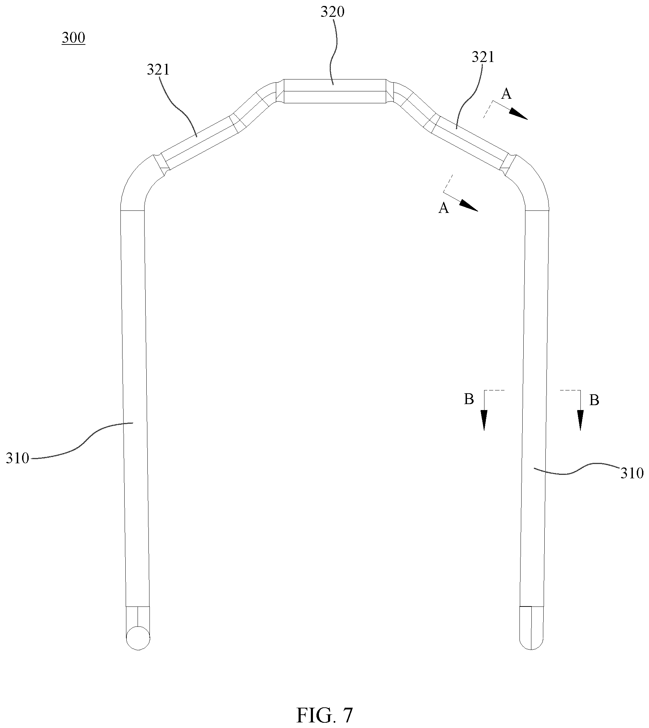

It can be understood that the connecting section 320 and the two limiting sections 310 form an approximate U-shaped structure. The two limiting sections 310 of the clamp spring 300 are located at opposite sides of the plug-in part 210, respectively, and middle portions of the two limiting sections 310 are stuck in the first annular groove 211. Exemplarily, as shown in FIG. 7, two stressed portions 321 are symmetrically arranged with a space between them. During the plug-in mounting of the plug-in part 210 of the second connector 200, the end of the plug-in part 210 can push against the two limiting sections 310 respectively, and the two limiting sections 310 cause the two stressed portions 321 to be elastically deformed respectively.

This structure facilitates the assembly and disassembly of the clamp spring 300. Specifically, after the two limiting sections 310 pass through the two gaps 110 respectively, the clamp spring 300 can be fixed on the first connector 100. The clamp spring 300 can be disassembled from the first connector 100 when the operator pulls the two limiting sections 310 outward. In addition, the two ends of the connecting section 320 are provided with the stressed sections 321 respectively, so that the two limiting sections 310 are easily pushed by the end of the plug-in section 210, and it is convenient for the operator to plug the plug-in section 210 into the first connector 100.

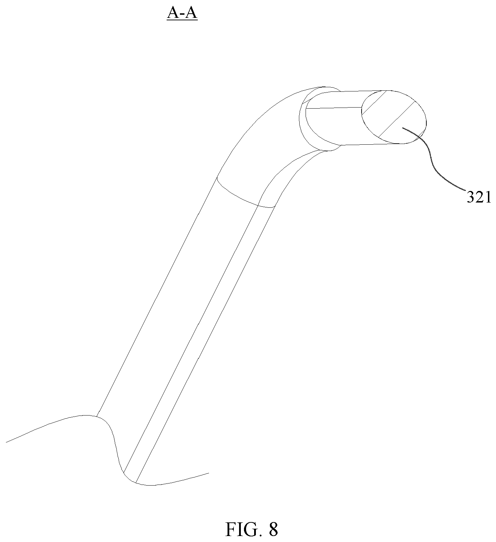

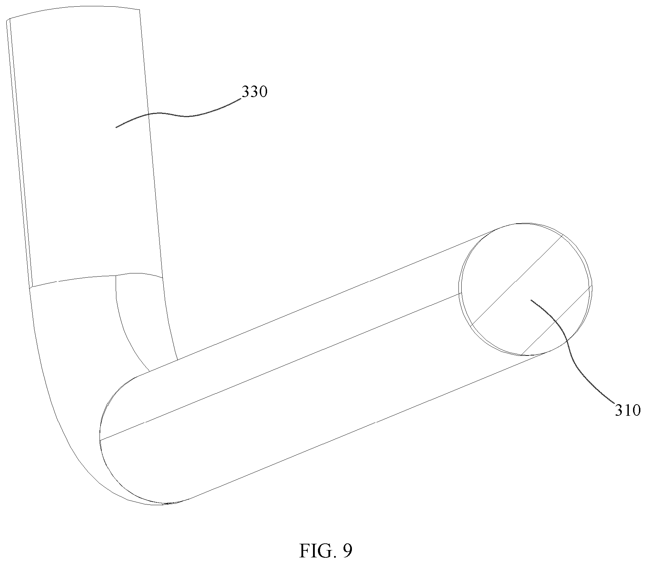

In one possible implementation, as shown in FIGs. 8 and 9, the cross-sectional shape of the stressed portion 321 is ellipse, and the cross-sectional shape of the rest portion of the clamp spring 300 is circle, with the long axis of the ellipse parallel to the axial direction of the first connector 100 and the short axis of the ellipse shorter than the diameter of the circle.

Where, the long axis of the ellipse is parallel to the axial direction of the first connector 100. When the limiting section 310 is subjected to external force, the limiting section 310 can easily cause the stressed portion 321 to be bended in a plane perpendicular to the axial direction of the first connector 100. Optionally, the length of the long axis of the ellipse is not less than the diameter of the circle, so that the limiting section 310 is not easy to cause the stressed portion 321 to be bended in other directions. In this embodiment, the specific lengths of the long axis and short axis of the ellipse are not limited, and those skilled in the art can set them according to actual needs.

In one embodiment, as shown in FIG. 1, FIG. 4 and FIG. 10, an outer peripheral surface of the first connector 100 is provided with a protecting lug 120, and the protecting lug 120 is provided with an accommodating cavity 121, and an end, which is far away from the connecting section 320, of the limiting section 310 extends into the accommodating cavity 121.

Where, the protecting lug 120 is located at a side, facing away from the connecting section 320, of the first connector 100. The protecting lug 120 may be provided on the first connector 100 by means of an integral molding process. It can be understood that the protecting lug 120 and the limiting section 310 are the same in number, and the end, which is far away from the connecting section 320, of each limiting section 310 extends into the accommodating cavity 121.

The second connector 200 can be disassembled from the first connector 100 when the operator pulls the end, extending into the accommodating cavity 121, of the limiting section 310 to make the limiting section 310 separate from the first annular groove 211.

With this structure, the protecting lug 120 can protect the end of the clamp spring 300 and prevent the end of the clamp spring 300 from being bumped. At the same time, during the use or transportation of the quick plug connector assembly, the protecting lug 120 can also prevent the clamp spring 300 from separating from the first connector 100 due to the end of the clamp spring 300 being hooked with other devices or components, thereby preventing the second connector 200 from separating from the first connector 100.

In a specific embodiment, as shown in FIGs. 1, 6 and 10, the clamp spring 300 further includes a bending section 330, and the bending section 330 is located at the end, which is far away from the connecting section 320, of the limiting section 310. The bending section 330 is located in the accommodating cavity 121, and the size of the bending section 330 in the axial direction of the first connector 100 is larger than that of the gap 110 in the axial direction of the first connector 100.

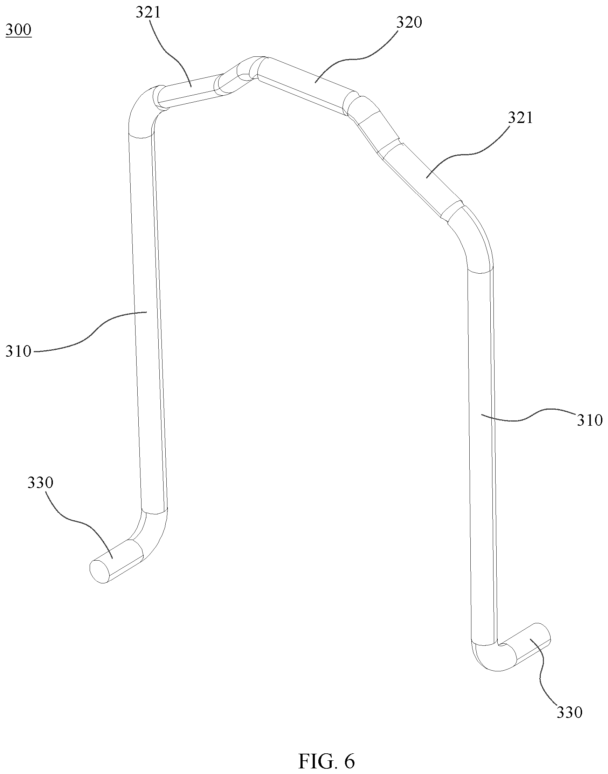

Exemplarily, the bending section 330 may be formed by means of bending. Optionally, the bending section 330 can extend in a direction parallel to the axial direction of the first connector 100, so as to avoid the end, which is far away from the connecting section 320, of the clamp spring 300 from extending out of the first connector 100 for too long in length. In one possible implementation, as shown in FIG. 6, when the number of limiting sections 310 is two, two bending sections 330 extend in two opposite directions respectively.

Through the above arrangement, after the clamp spring 300 is disposed on the first connector 100, the bending sections 330 can limit the position of the clamp spring 300. That is, the bending sections 330 can abut against edges of the gapes 110, respectively, so as to prevent the clamp spring 300 from moving relatively to the first connector 100 along an extension direction of the limiting section 310 and separating from the first connector 100, thereby ensuring the reliability of the connection between the first connector 100 and the second connector 200. In addition, after the bending section 330 is accommodated in the accommodating cavity 121, the protecting lug 120 can also prevent the clamp spring 300 from separating from the first connector 100 due to the bending section 330 being hooked with other devices or components.

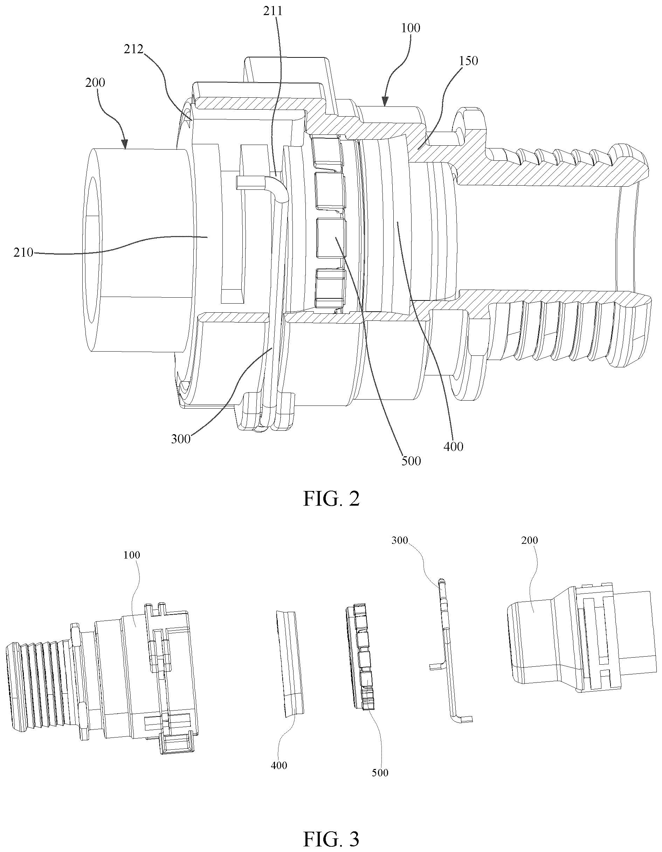

As shown in FIGs. 2 and 3, the quick plug connector assembly further includes a sealing ring 400 disposed on an inner peripheral surface of the first connector 100, and the sealing ring 400 is in interference fit with the inner peripheral surface of the first connector 100 and the outer peripheral surface of the second connector 200 respectively.

Exemplarily, the sealing ring 400 is made of an elastic material such as silica gel or rubber. When the plug-in part 210 of the second connector 200 is plugged into the first connector 100, the plug-in part 210 is configured to pass through the sealing ring 400. When the plug-in part 210 passes through the sealing ring 400, an outer peripheral surface of the plug-in part 210 and the inner peripheral surface of the first connector 100 both press the sealing ring 400 to make the sealing ring 400 elastically deformed.

With this structure, the sealing ring 400 can make sealing between the first connector 100 and the plug-in part 210 to avoid leakage between the first connector 100 and the second connector 200.

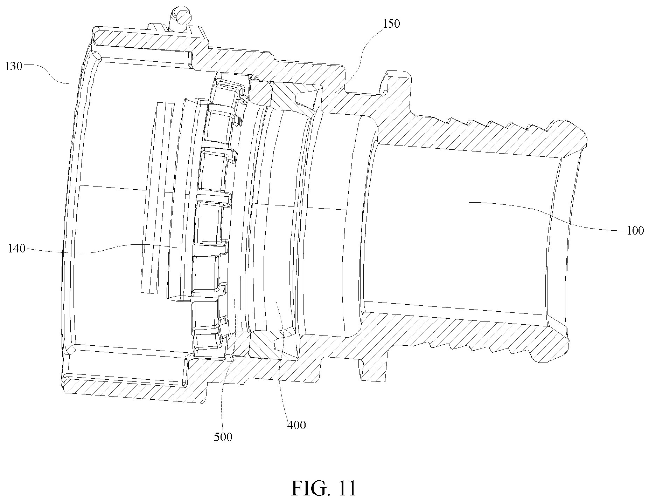

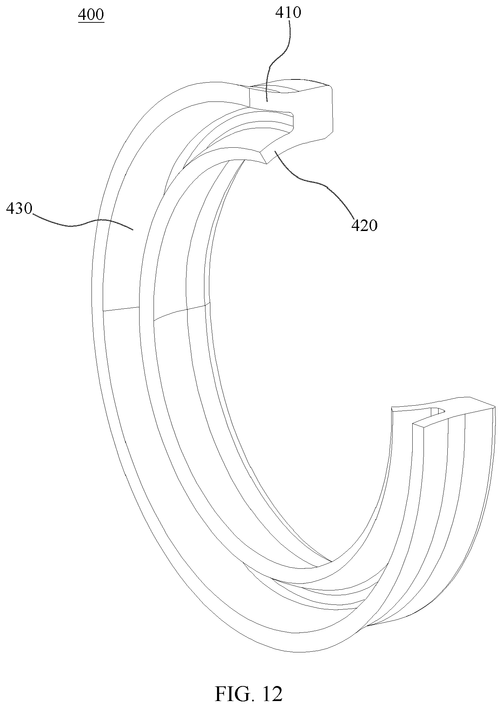

In one possible implementation, as shown in FIG. 2, FIG. 11 and FIG. 12, the first connector 100 has a first end 130 into which the plug-in part 210 is plugged, and an end, which is far away from the first end 130, of the sealing ring 400 is provided with an outer annular lip 410 and an inner annular lip 420. The outer annular lip 410 is configured to abut against the inner peripheral surface of the first connector 100, and the inner annular lip 420 is configured to abut against the outer peripheral surface of the second connector 200.

It can be understood that the plug-in part 210 can be plugged into the first connector 100 from the first end 130. Exemplarily, the sealing ring 400 is a Y-shaped sealing ring, and an opening of the Y-shaped sealing ring is disposed away from the first end 130, and the outer annular lip 410 and the inner annular lip 420 are two sloping sides of the Y-shaped sealing ring respectively.

Optionally, the distance between the outer annular lip 410 and the inner annular lip 420 gradually increases in a direction along which the plug-in part 210 is plugged. When the plug-in part 210 is plugged in place, the inner peripheral surface of the first connector 100 presses the outer annular lip 410 to make the outer annular lip 410 elastically deformed, and the outer peripheral surface of the plug-in part 210 presses the inner annular lip 420 to make the inner annular lip 420 elastically deformed.

Through the above arrangement, regarding the sealing ring 400 provided by this embodiment, compared with sealing rings with circular cross section in the related art, the second annular groove 430 provides deformation space for the outer annular lip 410 and the inner annular lip 420 when the second connector 200 is plugged, and the sealing ring 400 is more prone to elastic deformation, so that the resistance provided by the sealing ring 400 is smaller, and the insertion force required when the second connector 200 is plugged is further reduced. Meanwhile, the sealing ring 400 provided by this embodiment can also ensure the reliability of sealing between the first connector 100 and the second connector 200.

In an embodiment, as shown in FIGs. 2, 3 and 11, the quick plug connector assembly further includes a retaining ring 500. The inner peripheral surface of the first connector 100 is provided with a limiting protrusion 140 protrudes inward, and the first connector 100 is provided with a step part 150. One end of the sealing ring 400 abuts against the step part 150, the other end of the sealing ring 400 abuts against the retaining ring 500, and an end, which is far away from the sealing ring 400, of the retaining ring 500 abuts against the limiting protrusion 140.

Exemplarily, the retaining ring 500 can be made of plastic, which has a certain rigidity. The limiting protrusion 140 can be configured in an arc shape extending in a circumferential direction of the first connector 100, and the limiting protrusion 140 can be disposed on the first connector 100 by a one-time molding process. Optionally, an end, facing the first end 130, of the sealing ring 400 abuts against the retaining ring 500, so that after the sealing ring 400 abuts against the retaining ring 500, the sealing ring 400 will not move over the retaining ring 500 to move towards the first end 130.

In the process of assembling the sealing ring 400, the sealing ring 400 can be put into the first connector 100 firstly, and the retaining ring 500 can be put into the first connector 100. After the retaining ring 500 passes over the limiting protrusion 140 on the first connector 100, two ends of the retaining ring 500 abut against the limiting protrusion 140 and the sealing ring 400 respectively.

Through the above arrangement, the sealing ring 400 can be fixed to the first connector 100, thereby preventing the sealing ring 400 from moving relative to the first connector 100 along the axial direction of the first connector 100, and ensuring that the sealing ring 400 can reliably make sealing between the first connector 100 and the second connector 200.

In other embodiments, a third annular groove can be formed on the inner peripheral surface of the first connector 100, and the sealing ring 400 can be embedded in the third annular groove.

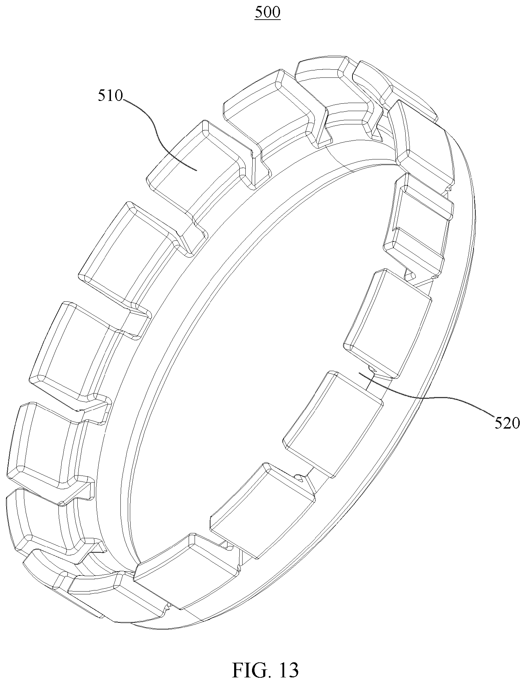

As shown in FIG. 2, FIG. 11 and FIG. 13, the end of the retaining ring 500 far away from the sealing ring 400 includes a plurality of fins 510 arranged at intervals, and ends of the fins 510 are configured to abut against the limiting protrusions 140.

Exemplarily, each fin 510 can be an approximate L-shaped structure, one end of the L-shaped structure is connected to a main body portion of the retaining ring 500, and the other end of the L-shaped structure extends in a direction away from the sealing ring 400. Where, each fin 510 can be provided on the main body portion of the retaining ring 500 by an integral molding process. The specific number of fins 510 is not limited in this embodiment, and persons of ordinary skill in the art can set them according to actual needs.

In one possible implementation, a plurality of fins 510 define an abutting part, an end, facing the first end 130, of the abutting part abuts against the limiting protrusion 140, and the diameter of the abutting part is larger than that of the main body portion of the retaining ring 500, and an end, which is far away from the abutting part, of the main body portion of the retaining ring 500 abuts against the sealing ring 400.

In the process of putting the retaining ring 500 into the first connector 100, the interval between two adjacent fins 510 provides a deformation space for the fins 510, and the retaining ring 500 can pass over the limiting protrusion 140 through the elastic deformation of the fins 510. After the retaining ring 500 passes over the limiting protrusion 140, the fins 510 are reset by their own elastic force, where the ends of the fins 510 opposite to the limiting protrusion 140 abuts against the limiting protrusion 140. That is, the above arrangement facilitates the assembly of the fins 510.

Optionally, a plurality of fins 510 are arranged on the retaining ring 500 at equal intervals.

Specifically, a plurality of fins 510 are arranged at equal intervals on the main body portion of the retaining ring 500. It can be understood that the retaining ring 500 is centrosymmetric around the axis of the retaining ring 500.

In the process of assembling the quick plug connector assembly, the sealing ring 400 is firstly assembled to the inside of the first connector 100, and then the retaining ring 500 is assembled to the first connector 100. In the process of assembling the retaining ring 500, it is not necessary to rotate the retaining ring 500 to a certain angle, which is beneficial to improving the assembly efficiency of the retaining ring 500.

Exemplarily, a groove 520 is formed between two adjacent fins 510, and the groove 520 extends to the outside of the fins 510.

Specifically, in the radial direction of the retaining ring 500, the groove 520 extends to the outside of the fins 510. In the axial direction of the retaining ring 500, one end of the groove 520 extends to the end of the fins 510 far away from the main body portion of the retaining ring 500, and the other end of the groove 520 extends to the main body portion of the retaining ring 500.

Through the above arrangement, each fin 510 has sufficient deformation capacity, and roots of the fins 510 can smoothly pass over the limiting protrusion 140 during the assembly of the retaining ring 500 into the first connector 100, so as to ensure that the limiting protrusion 140 will not damage the fins 510 when the limiting protrusion 140 abuts against the roots of the fins 510, resulting in no impurities or debris in the inside of the first connector 100, thus ensuring the reliability of the quick plug connector assembly.

In one embodiment, as shown in FIGs. 2, 4, 5 and 10, the plug-in part 210 is provided with a protruding part 212 protruding outward, and the first connector 100 is provided with an accommodating part 160, and the protruding part 212 extends into the accommodating part 160.

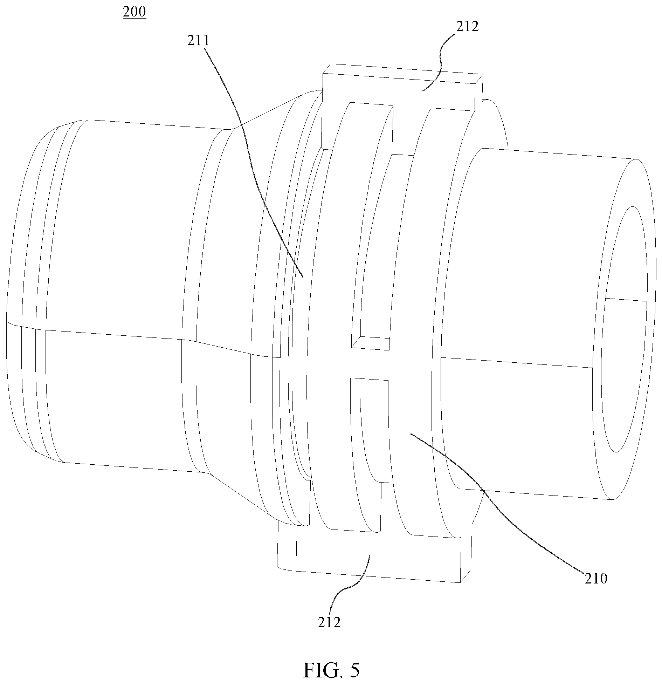

Exemplarily, the protrusion 212 is located on the side wall of the plug-in part 210, and an end of the protruding part 212 extends to the end of the plug-in part 210. Where, the protruding part 212 can be a rectangular block structure, which can be arranged on the plug-in part 210 by a one-step molding process. The protruding part 212 can be one or multiple in number. For example, as shown in FIG. 5, the plug-in part 210 is provided with two protruding parts 212, and the two protruding parts 212 are located on opposite sides of the plug-in part 210 respectively.

The side wall of the first connector 100 is provided with a convex part protruding outward, and an inner wall of the convex part defines the accommodating cavity 121, and an end of the convex part extends to the first end 130. The convex part is matched with the protruding part 212 on the plug-in part 210 in number, and each protruding part 212 extends into an accommodating cavity 121 defined by a corresponding convex part.

In this embodiment, when the protruding part 212 extends into the accommodating part 160, the plug-in part 210 cannot rotate relative to the first connector 100, thus ensuring the reliability of the connection between the first connector 100 and the second connector 200.

In the description of the present invention, it should be understood that, the azimuth or position relationships indicated by terms "center", "longitudinal", "transversal", "length", "width", "thickness", "up", "down", "front", "back", "left", "right", "vertical", "horizontal", "top", "bottom", "inside", "outside", "clockwise", "counterclockwise", "axial", "radial", "circumferential" or the like are based on the azimuth or position relationships shown in the drawings, which is only for the convenience of describing the present invention and simplifying the description, and does not indicate or imply that the referred devices or elements must have a specific orientation, be constructed and operated in a specific orientation, so it cannot be understood as limiting the present invention.

In the present invention, unless otherwise specified and limited, the terms "mount", "connected with", "connected to" and "fixed to" or the like should be generally understood, for example, the connection can be fixed connection, detachable connection or integrated connection; can be directly connected, can also be indirectly connection through an intermediate medium, can be the internal communication of two elements or the interaction between two elements. For persons of ordinary skill in the art, the specific meanings of the above terms in the present invention can be understood according to specific situations.

It should be noted that in the description of the present invention, the terms "first" and "second" are only used for the convenience of describing different components, and cannot be understood as indicating or implying the order relationship, relative importance or implicitly indicating the number of indicated technical features. Therefore, the features defined as "first" and "second" can explicitly or implicitly include at least one of these features.

Finally, it should be noted that the above embodiments are merely intended for describing the technical solutions of the present invention other than limiting the present invention. Although the present invention has been described in detail with reference to the foregoing embodiments, persons of ordinary skill in the art should understand that they may still make modifications to the technical solutions described in the foregoing embodiments or make equivalent substitutions to some or all the technical features thereof, and these modifications or substitutions do not make the essence of the corresponding technical solutions depart from the scope of the technical solutions of various embodiments of the present invention.

## Claims

1. A quick plug connector assembly, comprising a first connector, a second connector, and a clamp spring, wherein the second connector has a plug-in part plugged into the first connector; the clamp spring is disposed on the first connector, and the clamp spring comprises a limiting section and a connecting section located at an end of the limiting section; a side wall of the first connector is provided with a gap, and an outer peripheral surface of the plug-in part is provided with a first annular groove facing the gap, and the limiting section passes through the gap and is stuck in the first annular groove;
the connecting section is provided with a stressed portion, and the stressed portion has a cross-sectional size smaller than that of a rest portion of the clamp spring.

2. The quick plug connector assembly according to claim 1, wherein two limiting sections are provided, the connecting section is arranged between the two limiting sections, each of two opposite sides of the first connector is provided with the gap, each of the two limiting sections passes through the gap, and two stressed portion are provided, and the two stressed portions are located at two ends of the connecting section respectively.

3. The quick plug connector assembly according to claim 1 or 2, wherein the stressed portion has a cross-sectional shape of ellipse, the rest portion of the clamp spring has a cross-sectional shape of circle, a long axis of the ellipse is parallel to an axial direction of the first connector, and a length of a short axis of the ellipse is smaller than a diameter of the circle.

4. The quick plug connector assembly according to any one of claims 1 to 3, wherein an outer peripheral surface of the first connector is provided with a protecting lug, and the protecting lug is provided with an accommodating cavity, and an end, which is far away from the connecting section, of the limiting section extends into the accommodating cavity.

5. The quick plug connector assembly according to claim 4, wherein the clamp spring further comprises a bending section, and the bending section is located at the end of the limiting section far away from the connecting section, and the bending section is located in the accommodating cavity, and a size of the bending section in the axial direction of the first connector is larger than that of the gap in the axial direction of the first connector.

6. The quick plug connector assembly according to any one of claims 1 to 5, wherein the quick plug connector assembly further comprises a sealing ring disposed on an inner peripheral surface of the first connector, and the sealing ring is in interference fit with the inner peripheral surface of the first connector and an outer peripheral surface of the second connector respectively.

7. The quick plug connector assembly according to claim 6, wherein the first connector comprises a first end into which the plug-in part is plugged, and an end, which is far away from the first end, of the sealing ring is provided with an outer annular lip and an inner annular lip, wherein the outer annular lip is configured to abut against the inner peripheral surface of the first connector, and the inner annular lip is configured to abut against the outer peripheral surface of the second connector, and a second annular groove is formed between the outer annular lip and the inner annular lip.

8. The quick plug connector assembly according to claim 6 or 7, wherein the quick plug connector assembly further comprises a retaining ring, and the inner peripheral surface of the first connector is provided with a limiting protrusion protruding inward, and the first connector is provided with a step part, one end of the sealing ring abuts against the step part, the other end of the sealing ring abuts against the retaining ring, and an end, which is far away from the sealing ring, of the retaining ring abuts against the limiting protrusion.

9. The quick plug connector assembly according to claim 8, wherein the end, which is far away from the sealing ring, of the retaining ring is provided with a plurality of fins arranged at intervals, and ends of the fins are configured to abut against the limiting protrusion.

10. The quick plug connector assembly according to claim 9, wherein the plurality of fins are arranged on the retaining ring at equal intervals.

11. The quick plug connector assembly according to claim 9, wherein a groove is formed between two adjacent fins, and the groove extends to an outside of the fins.

12. The quick plug connector assembly according to any one of claims 1 to 11, wherein the plug-in part is provided with a protruding part protruding outwards, and the first connector is provided with an accommodating part, and the protruding part extends into the accommodating part.
